Europäisches Patentamt

European Patent Office

Office européen des brevets

Veröffentlichungsnummer: **0 272 475**

**A2**

# EUROPÄISCHE PATENTANMELDUNG

Anmeldenummer: 87117289.6

Int. Cl.⁴: **G01K 1/08**

Anmeldetag: 24.11.87

Priorität: 27.11.86 DE 8731832 U

Veröffentlichungstag der Anmeldung:
29.06.88 Patentblatt 88/26

Benannte Vertragsstaaten:
AT BE CH DE FR IT LI NL

Anmelder: **Viessmann Werke GmbH & Co.
Postfach 10 Viessmann Strasse
D-3559 Allendorf(Eder)(DE)**

Erfinder: **Viessmann, Hans, Dr.
Im Hain
D- 3559 Battenberg /Eder(DE)**

Vertreter: **Wolf, Günter, Dipl.Ing.
Patentanwälte Dipl.-Ing. Amthor Dipl.-Ing.
Wolf Postfach 70 02 45 An der Mainbrücke 16
D-6450 Hanau 7(DE)**

Tauchhülse mit Fühler.

Die Tauchhülse mit Fühler, insbesondere Thermofühler ist für Meßstellen in Heizungsanlagen bestimmt und besteht aus einem Kopfstück mit am unteren Ende verschlossenen Tauchrohr, in dem der Fühler mit Kabelzuführungen angeordnet ist. Am Kopfstück (1) ist ein Haltestab (2) und an diesem ein sich längs im Tauchrohr (3) erstreckendes Federblatt (4) angeordnet. Zwischen dem Federblatt (4) und der Tauchrohrinnenwand (4) ist der mindestens eine Fühler (5) verspannt angeordnet.

Fig. 1

## Tauchhülse mit Fühler

Die Erfindung betrifft eine Tauchhülse mit Fühler, insbesondere Thermofühler für Meßstellen in Heizungsanlagen gemäß Oberbegriff des Hauptanspruches.

Tauchhülsen der genannten Art sind allgemein bekannt und in Benutzung und diese erfüllen auch mehr oder weniger gut ihren Zweck, nämlich irgendwelche Meßfühler aufzunehmen, insbesondere Thermofühler, um damit bspw. die Heizmediumstemperaturen an bestimmten Stellen einer Heizungsanlage erfühlen und damit messen zu können. In die bisherigen Tauchhülsen werden die Meßfühler mit ihren Kabelzuführungen einfach eingesetzt, womit allerdings nicht automatisch ein Kontakt mit der Innenwand des Tauchrohres, d.h. zumindest kein großflächiger Kontakt ohne weiteres erreichbar ist, was zwangsläufig zu einer mehr oder weniger Trägheit der ganzen Meßanordnung führt, obgleich es wünschenswert ist, die außerhalb der Tauchhülse bestehenden Temperaturen unmittelbar und möglichst trägheitslos, d.h. ohne Verzögerung richtig erfühlen und damit sofort messen zu können.

Der Erfindung liegt demgemäß die Aufgabe zugrunde, eine Tauchhülse der eingangs genannten Art mit einfachen Mitteln dahingehend auszubilden und zu verbessern, daß der bzw. die Meßfühler einerseits problemlos in die Tauchhülse eingeführt werden können, wobei aber gleichzeitig dafür gesorgt werden soll, daß der bzw. die eingeführten Meßfühler mit sich über ihre ganze Länge erstreckenden Wandkontakt in der Tauchhülse sitzen, um damit zu gewährleisten, daß möglichst verzögerungslos die Temperatur erfühlt werden kann, die außerhalb der Tauchhülse besteht, d.h., die Temperatur, die das Tauchrohr selbst angenommen hat.

Diese Aufgabe ist mit einer Tauchhülse der eingangs genannten Art nach der Erfindung durch die im Kennzeichen des Hauptanspruches angeführten Merkmale gelöst. Vorteilhafte Weiterbildungen ergeben sich nach den Unteransprüchen.

Durch diese Ausbildung der Tauchhülse ist einmal dafür gesorgt, daß der bzw. die Fühler mit Hilfe des Haltestabes und des Federblattes bis in den tiefstmöglichen Bereich der Tauchhülse eingeschoben werden können, wobei sich dann durch das noch näher zu beschreibende Federblatt eine dichte Anlage des Fühlers über seine ganze Länge an der Tauchrohrinnenwand ergibt. Zweckmäßig ist das Federblatt mit seinem oberen Ende am unteren Ende des Haltestabes in geeigneter Weise angeordnet bzw. befestigt, wofür das Federblatt einfach an seinem oberen Ende mit einem kleinen Loch versehen ist, in das das hakenartig ausgebildete Ende des Haltestabes eingeführt und dieses dann einfach umgebogen wird. Die Verbindung zwischen Federblatt und Haltestab ist also mehr oder weniger locker und das Ganze stellt kein in sich starres Gebilde dar, was sonst evtl. die Einführung des Ganzen in das Tauchrohr behindern könnte. Das Federblatt ist im Querschnitt U-förmig ausgebildet und die freien Enden der Federblattschenkel sind mit nach außen gerichteten Spannbögen versehen, wobei die Distanz der Bogenenden angenähert dem Innendurchmesser des Tauchrohres entspricht. Durch diese Maßgabe und Ausbildung verspannt sich also selbst bei Einsatz nur eines Fühlers das Federblatt im Tauchrohr und bringt damit den betreffenden Fühler zwangsläufig in Kontakt zur Innenwand des Tauchrohres, das somit über die volle Länge einer Mantellinie am Tauchrohr anliegt und mit diesem in Kontakt steht. In Rücksicht auf die noch näher zu erläuternde Ausbildung des Federblattes, und zwar hinsichtlich seiner Querschnittsausbildung, ist der Haltestab vorteilhaft in bezug auf die Längsachse des Tauchrohres exzentrisch am Kopfstück angeordnet. Um andererseits die von den Fühlern aus der Tauchhülse herauszuführenden Kabel vom Wandkontakt mit dem Tauchrohr fernzuhalten, was bei entsprechend hohen Außentemperaturen ggf. und je nach Art der Kabelisolierung zu Beeinträchtigungen dieser Isolierung führen kann, ist am Haltestab zwischen Kopfstück und Federblatt mindestens ein Kabelführungsstück mit mindestens einer Kabeldurchgriffsausnehmung angeordnet. Je nach Länge der ganzen Tauchhülse und des sich darin erstreckenden Haltestabes können am Haltestab zwischen Federblatt und Kopfstück mehrere solcher Kabelführungsstücke angeordnet werden. Diese Kabelführungsstücke sind aus einer dem Innenquerschnitt des Tauchrohres entsprechenden Keisscheibe aus federnd elastischem Kunststoffmaterial mit drei Kabeldurchgriffsausnehmungen, zwei Materialausnehmungen und einer Haltestangenausnehmung gebildet, welche Ausnehmungen zum Scheibenumfang hin offen sind. Durch diese Ausbildung der Kabelführungsstücke stellen diese gewissermaßen stern-bzw. spinnenartige Gebilde dar, die einfach mit ihrer Haltestangenausnehmung am Haltestab aufgeschnäppt werden können, die sich aber andererseits an der Tauchrohrinnenwand abstützen und die ferner die von den Fühlern abgehenden Kabel kontaktfrei zur Tauchrohrinnenwand zum Kopfstück führen, das zweckmäßig mit einer nach außen offenen Kabeleinführungsnut versehen ist, die in einen Kabeleinführungskanal ausmündet, in dem oberhalb eines Tauchrohreinsatzteiles ein Kabelzugentlastungselement angeordnet ist. Durch diese Ausbildung kann der Haltestab mit seinem Kopfstück und dem Federblatt einschließlich der Fühler mit ihren Kabelzuleitungen als einschubfertige Einheit vormon tiert und in das Tauchrohr eingeführt werden, das in geeigneter Weise fest mit dem Kopfstück verbunden wird und mit diesem in eine entsprechende Installationsöffnung bspw. eines Heizungskessels flüssigkeitsdicht eingesetzt werden kann.

Die erfindungsgemäße Tauchhülse wird nachfolgend anhand der zeichnerischen Darstellung eines Ausführungsbeispieles näher erläutert.

Es zeigt schematisch

Fig. 1 die Tauchhülse teilsweise in Ansicht und im Längsschnitt;

Fig. 2 perspektivisch das Federblatt;

Fig. 3 das Kopfstück in Ansicht von unten;

Fig. 4 das Kopfstück gemäß Fig. 3 im Schnitt und

Fig. 5 stark vergrößert die Anordnung der Fühler im Tauchrohr und in Zuordnung zum Federblatt und zum Kabelführungsstück.

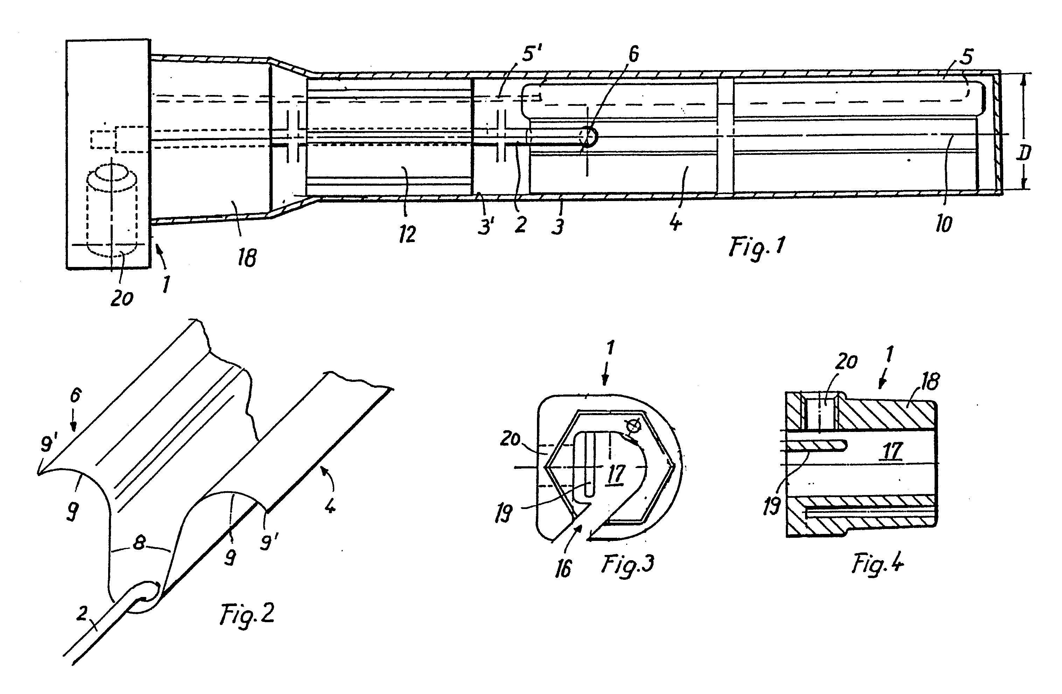

Die Tauchhülse besteht gemäß Fig. 1 aus einem Kopfstück 1 mit am unteren Ende verschlossenem Tauchrohr 3, in dem der Fühler 5 mit seiner Kabelzuführung 5' angeordnet ist. Im gezeigten Ausführungsbeispiel ist das Tauchrohr 3 an seinem kopfstückseitigen Ende im Querschnitt als Sechskant etwas aufgeweitet ausgebildet, um damit auf das entsprechend geformte Tauchrohreinsatzteil 18 des Kopfstückes aufgeschoben und in geeigneter Weise an diesem festgelegt werden zu können. Am Kopfstück 1 ist außermittig ein Haltestab 2 und an diesem das sich längs im Tauchrohr 3 erstreckende Federblatt 4 angeordnet, zwischen dem und der Tauchrohrinnenwand 3' der bzw. die Fühler 5 verspannt angeordnet sind (s. Fig. 5). Das Federblatt 4 ist dabei mit seinem oberen Ende 6 am unteren Ende des Haltestabes 2 in geeigneter Weise befestigt, und zwar gemäß dargestelltem Ausführungsbeispiel durch einfaches Umbiegen des Haltestabendes, das eine Öffnung 4' am oberen Ende 6 des Federblattes 4 durchgreift (s. Fig. 2). Damit hängt das Federblatt bis zu einem gewissen Grad beweglich am Haltestab 2. Wie insbesondere aus Fig. 2 und 5 ersichtlich, ist das Federblatt 4 im Querschnitt U-förmig ausgebildet, wobei die freien Enden 7 der Federblattschenkel 8 mit nach außen gerichteten Spannbögen 9 versehen sind. Die Distanz der Bogenenden 9' entspricht dabei angenähert dem Innendurchmesser D des Tauchrohres 3. Am Haltestab 2 ist zwischen dem Kopfstück 1 und dem Federblatt 4 ein Kabelführungsstück 12 mit mindestens einer Kabeldurchgriffsausnehmung 13 angeordnet, je nach Länge des Tauchrohres bzw. der zu überbrückenden Distanz zwischen Federblatt 4 und Kopfstück 1 können auch mehrere solcher Kabelführungsstücke 12 am Haltestab 2 angeordnet sein. Das vom Fühler 5 wegführende Kabel wird in der Kabeldurchgriffsausnehmung 13 gehalten und steht somit mit der Innenwand 3' des Tauchrohres 3 nicht in Kontakt.

Vorteilhaft ist das Kabelführungsstück 12 im Sinne der Fig. 5 ausgebildet, d.h., das Kabelführungsstück ist aus einer dem Innenquerschnitt des Tauchrohres 3 entsprechenden Kreisscheibe 14 aus federnd elastischem Kunststoffmaterial mit drei Kabeldurchgriffsausnehmungen 13, zwei Materialausnehmungen 14' und mit einer Haltestangenausnehmung 15 versehen, welche Ausnehmungen 13, 14', 15 zum Scheibenumfang hin offen sind. Wie aus Fig. 5 ersichtlich, ist also das Kabelführungsstück 12 durch die diversen Ausnehmungen auf ein stern-bzw. spinnenartiges Gebilde reduziert, das mit seiner Haltestangenausnehmung 15 einfach auf den Haltestab aufgeschnappt werden kann. Durch die spezielle und bevorzugte Ausbildung des Federblattes 4, wie dargestellt, können ohne weiteres drei Fühler 5 im Tauchrohr 3 dem Federblatt 4 zugeordnet werden, wobei das speziell ausgebildete Federblatt dafür sorgt, daß alle drei Fühler 5 an der Innenwand 3' des Tauchrohres 3 zur Anlage kommen. Ein solcher Zwangskontakt mit der Innenwand 3' des Tauchrohres 3 kommt aber auch ohne weiteres dann zustande, wenn, egal wo, nur zwei oder nur ein Fühler 5 eingesetzt werden.

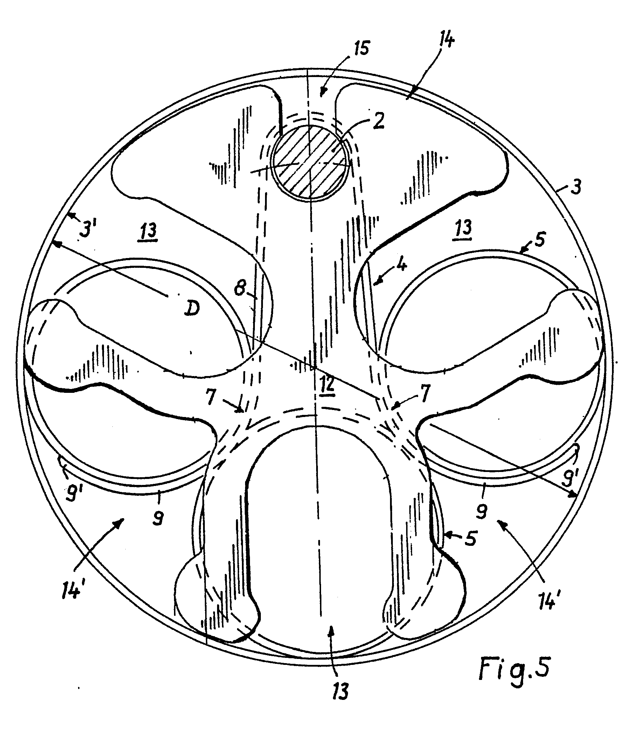

Das Kopfstück 1 ist ebenfalls aus federnd elastischem Kunststoffmaterial gebildet und, wie aus Fig. 3, 4 ersichtlich, mit einer nach außen offenen Kabeleinführungsnut 16 versehen, die in einen Kabeleinführungskanal 17 ausmündet, der das ganze Kopfstück 1 durchgreift. Im Kabeleinführungskanal 17 ist oberhalb des Tauchrohreinsatzteiles 18 ein Kabelzugentlastungselement 19 in Form einer Zunge vorgesehen, das mittels einer hier nicht dargestellten kleinen, in eine Gewindebohrung einschraubbaren Schraube gegen das bzw. die durch den Kabeleinführungskanal 17 geführten Kabel verspannt werden kann.

Das ganze Gebilde, bestehend aus Kopfstück 1, Haltestab 2, einem oder mehreren Kabelführungsstücken 12 und Federblatt 4 wird unter Beifügung einer oder mehrerer Fühler 5 im Bereich des Federblattes 4 zunächst in das im Querschnitt sechsförmige (s. Fig. 3) aufgeweitete Ende des Tauchrohres 3 eingesetzt, wobei die zu den Fühlern 5 gehörigen Kabel bereits in die Ausnehmungen 13 der Kabelführungsstücke und auch in den Kabeleinführungskanal 17 des Kopfstückes eingelegt sind, was problemlos ist, da die Ausnehmungen 13 und auch die Kabeleinführungsnut 16 über die ganze Länge dieser Elemente seitlich offen sind. Danach wird das Ganze einfach in das Tauchrohr 3 weiter eingeschoben, bis das Tauchrohreinsatzteil 18 des Kopfstückes 1 voll in der kopfstückseitigen Erweiterung des Tauchrohres aufgenommen ist. Das Kopfstück 1 bzw. das Tauchrohreinsatzteil 18 wird dann am Tauchrohr 3 in geeigneter Weise festgelegt, was nicht näher dargestellt ist.

**Ansprüche**

1. Tauchhülse mit Fühler, insbesondere Thermofühler für Meßstellen in bzw. Heizungsanlagen, bestehend aus einem Kopfstück mit am unteren Ende verschlossenen Tauchrohr, in dem der Fühler mit Kabelzuführungen angeordnet ist,
**dadurch gekennzeichnet,**
daß am Kopfstück (1) ein Haltestab (2) und an diesem ein sich längs im Tauchrohr (3) erstreckendes Federblatt (4) angeordnet ist, zwischen dem und der Tauchrohrinnenwand (4) der mindestens eine Fühler (5) verspannt angeordnet ist.

2. Tauchhülse nach Anspruch 1,
**dadurch gekennzeichnet,**
daß das Federblatt (4) mit seinem oberen Ende (6) am unteren Ende des Haltestabes (2) angeordnet ist.

3. Tauchhülse nach Anspruch 1 oder 2,
**dadurch gekennzeichnet,**
daß das Federblatt (4) im Querschnitt U-förmig ausgebildet ist und die freien Enden (7) der Federblattschenkel (8) mit nach außen gerichteten Spannbögen (9) versehen sind, wobei die Distanz der Bogenenden (9') angenähert dem Innendurchmesser (D) des Tauchrohres (3) entspricht.

4. Tauchhülse nach einem der Ansprüche 1 bis 3,
**dadurch gekennzeichnet,**
daß der Haltestab (2) in bezug auf die Längsachse (10) des Tauchrohres (3) exzentrisch am Kopfstück (1) angeordnet ist.

5. Tauchhülse nach einem der Ansprüche 1 bis 4,
**dadurch gekennzeichnet,**
daß am Haltestab (2) zwischen Kopfstück (1) und Federblatt (4) mindestens ein Kabelführungsstück (12) mit mindestens einer Kabeldurchgriffsöffnung (13) angeordnet ist.

6. Tauchhülse nach Anspruch 5,
**dadurch gekennzeichnet,**
daß das Kabelführungstück (12) aus einer dem Innenquerschnitt des Tauchrohres (3) entsprechenden Kreisscheibe (14) aus federnd elastischem Material mit Kabeldurchgriffsausnehmunen (13), Materialausnehmungen (14') und einer Haltestangenausnehmung (15) gebildet ist, welche Ausnehmungen (13, 14', 15) zum Scheibenumfang hin offen sind.

7. Tauchhülse nach einem der Ansprüche 1 bis 6,
**dadurch gekennzeichnet,**
daß das Kopfstück (1) mit einer nach außen offenen Kabeleinführungsnut (16) versehen ist, die in einen Kabeleinführungskanal (17) ausmündet, in dem oberhalb eines Tauchrohreinsatzteiles (18) ein Kabelzugentlastungselement (19) angeordnet ist.

Fig. 1

Fig. 2

Fig. 3

Fig. 4

0 272 475

Fig.5